Europäisches Patentamt

European Patent Office

Office européen des brevets

(11) Publication number: **0 200 036 B1**

# EUROPEAN PATENT SPECIFICATION

(45) Date of publication of patent specification: **02.09.92**  (51) Int. Cl.⁵: **G09G 1/16**, G09G 1/00

(21) Application number: **86104765.2**

(22) Date of filing: **08.04.86**

(54) **Method and system for displaying images in adjacent display areas.**

(30) Priority: **26.04.85 JP 89089/85**

(43) Date of publication of application:
**10.12.86 Bulletin 86/45**

(45) Publication of the grant of the patent:
**02.09.92 Bulletin 92/36**

(84) Designated Contracting States:
**DE FR GB**

(56) References cited:
**DE-A- 3 419 219**
**FR-A- 2 535 497**
**GB-A- 2 147 772**

**WESCON TECHNICAL PAPERS, vol. 23, no. 3, 30th October - 2nd November 1984, pages 1-8, Anaheim, California, Los Angeles, US; KATSURA et al.: "Graphics display processor to integrate drawing algorithms and display controls"**

(73) Proprietor: **International Business Machines Corporation**
**Old Orchard Road**
**Armonk, N.Y. 10504(US)**

(72) Inventor: **Iida, Hiroyasu**
**1-404, 426-1, Kokubu**
**Ebina-shi Kanagawa-ken(JP)**

(74) Representative: **Blakemore, Frederick Norman**
**IBM United Kingdom Limited Intellectual Property Department Hursley Park**
**Winchester Hampshire SO21 2JN(GB)**

## Description

This invention relates to a method and a system for displaying an image on a display screen having a plurality of display rows, and more particularly to a method and a system for displaying an image wherein for each display row a boundary between adjacent display areas on the display screen can be variably set.

In known image display apparatus that is used for an information processing terminal, a plurality of display areas can be defined on the display screen, to display an image in each display area in order to utilize a limited display screen effectively.

For example, in Japanese Laid-open Patent Specification No. 92937/80, a display screen is constituted by defining in a row direction and in parallel a plurality of display areas having a display length of m characters per a row, image information being stored in a screen memory having a storage length of m characters per a row in the order of display area and of row number, the content of an address counter being transferred and stored into an auxiliary register when a character counter counts m, and the content of the auxiliary register being set in the address counter to generate an address for reading the image information stored in the screen memory, thereby displaying an image in each display area.

In such a conventional approach, the row display length of the display area is fixed to predetermined m characters for all display rows, and it is required to use specially a screen memory storing predetermined image information and having its storage length fixed to m.

DE-34 19 219-A1 discloses a control device for display of partial images on a display screen, said display being subdivided in a plurality of blocks. A display data memory means stores data of the images to be displayed, and a control memory defines a plurality of subdivided images, said images comprising one or more blocks.

The display data memory is accessed by means of an address which corresponds to the partial picture to which a selected block on the screen belongs, in accordance with the output from the control memory.

By means of priority circuit comprised in an addressing means, overlapping partial pictures can be flexibly handled in accordance with a predetermined priority order.

This document does not address the problem of variably setting the boundaries of the partial pictures.

Therefore, in the conventional approach, it is impossible to define at will a boundary in row direction between each adjacent display areas, to change the boundary for each display row, and to display image information from a usual refresh buffer memory through windowing.

Therefore, the object of the present invention is to provide an image display method and a system wherein a boundary in row direction between each adjacent display areas on the display screen can be varied and defined for each display line without requiring great expense.

This object is achieved by the invention of claims 1 and 3; embodiments of the invention are characterized in the dependent claims.

It is preferable to fetch the corresponding data for each display row after displaying an image for the just preceding display row because it requires less number of means for loading the fetched data.

The image display system of the invention comprises an image information storage means to store the image information. For each display row, a start address in the image information storage means for image information to be displayed in each display area is stored in a row information storage means. For each display row, boundary data defining a boundary between each adjacent display areas is stored in a boundary information storage means. The boundary data is appropriately fetched from the boundary information storage means to a boundary indication means. On the other hand, said start address is also appropriately fetched from the row information storage means to an address generation means. The address generation means generates address in said image information storage means for image information to be displayed in each display area, and switches generation of said address between each adjacent display areas under control of the boundary indication means.

It is preferable to realize the boundary information storage means and the row information storage means by a row table storage means because it can realize both means in one storage means and provides simple and inexpensive configuration. Said address generation means can be realized by, for example, a counter means and a register means. Said boundary indication means can be realized by, for example, a counter means.

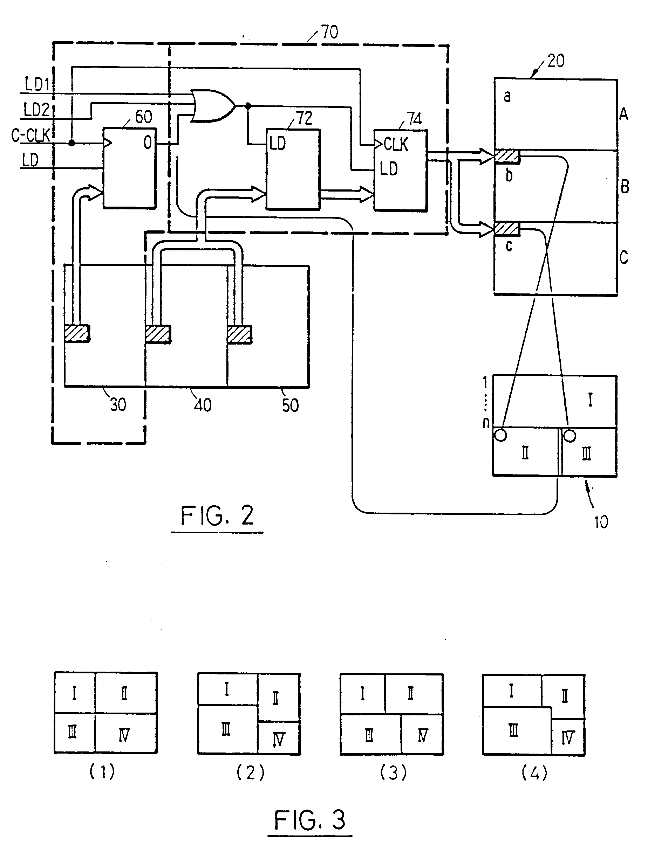

This invention allows to define the boundary in a row direction between the adjacent display areas variably for each display row. Therefore, while, in the conventional method mentioned earlier, the boundary in a row direction is fixed (as shown in Figure 3 (1) and (2)), that is, the display screen can be divided into display areas horizontally only at a position of predetermined column, the invention allows to freely define a boundary in the direction of row on the display screen (as shown in Figure 3 (3) and (4)), that is, the display screen can be divided into display areas horizontally at various column positions.

According to the invention, such an image display method can be inexpensively embodied by an image display system with very simple configuration. In addition, since it is not required to prepare image information in a special screen memory as in the above-mentioned conventional method, handling of image information is simple and free, and thus high speed displaying can be attained with simple display operation and a windowing display may be attained.

An embodiment of the invention is now described with reference to the drawings in which:

Figure 1 shows an illustrative diagram of one embodiment of the image display method according to the invention;

Figure 2 shows a block diagram of one embodiment of the image display system according to the invention; and

Figure 3 shows an illustrative diagram of how to divide the display screen.

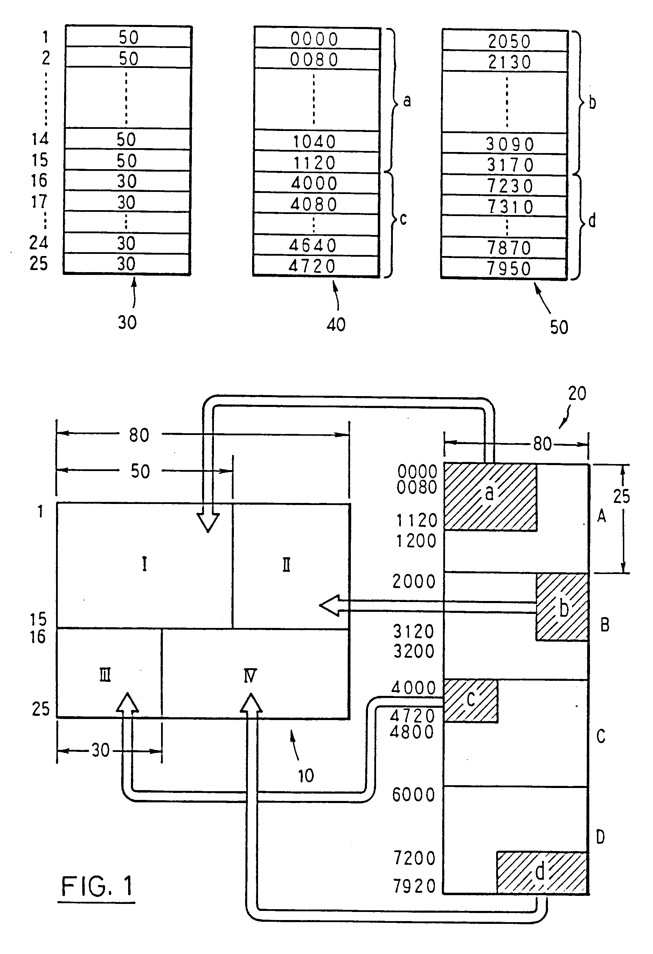

Figure 1 shows an example in which the image display method of the invention is applied to a display with 25 rows and 80 characters per row. A refresh buffer memory 20 has image information on images A through D each of which has a size of 80 characters per a row × 25 rows. Now, it is assumed to select portions a, b, c and d (shown hatched) from the image information and to display them on a display screen 10.

Displayed in adjacent display areas I and II on the display screen 10, respectively, are the portion a of 50 characters × 15 rows at upper left corner of the image A and the portion b of 30 characters × 15 rows at the upper right corner of the image B. Similarly, displayed in adjacent display areas III and IV on the display screen 10, respectively, are the portion c of 30 characters × 10 rows at upper left corner of the image C and the portion d of 50 characters × 10 rows at the lower right corner of the image D.

The boundary data defining the boundary between each adjacent display area is stored in a boundary information storage means 30 for each display row. The boundary data is information prescribing the number of displayed characters in each display row of the display areas I and III, and information on a display start location on each display row of the display areas II and IV or a location from which column of the display screen 10 the display is started. Thus, when display is made on each display row, the corresponding boundary data is fetched and the image display is switched between the adjacent display areas I and II, or III and IV basing on the fetched boundary data. In the example of Fig. 1, the boundary information storage means 30 is set with a value of 50 that defines the boundary between the adjacent display areas I and II for the display rows 1 to 15, and a value of 30 that defines the boundary between the adjacent display areas III and IV for the display rows 16 to 25.

In addition, for the adjacent display areas I and III to be first displayed on each display row, a start address for each display row in the refresh buffer memory 20 for the portion a of the image A and the portion c of the image C is stored in a row table storage means 40 storing row information. Addresses 0000, 0080, ..., 1040, 1120 are set for the display rows 1 to 15 for sequentially displaying the portion a of the image A from the upper left corner, while addresses 4000, 4080, ..., 4640, 4720 are set for the display rows 16 to 25 for sequentially displaying the portion c of the image C from the upper left corner.

Similarly, for the adjacent display areas II and IV to be second displayed on each display row, a start address for each display row in the refresh buffer memory 20 for the portion b of image B and the portion d of the image D is stored in a row table storage means 50 storing row information. Addresses 2050, 2130, ..., 3090, 3170 are set for the display rows 1 to 15 for sequentially displaying the portion b of the image B from the upper left corner, while addresses 7230, 7310, ..., 7870, 7950 are set for the display rows 16 to 25 for sequentially displaying the portion d of the image D from the upper left corner.

It is possible to increase the adjacent display areas defined in a row direction by adding a boundary information storage means and a row information storage means. Since the boundary information storage means is to store row information, it may be realized by a row table storage means. The content stored in the boundary information storage means and the row table storage means depends on software.

Figure 2 shows an embodiment of the image display system according to the invention. Similar to Figure 1, Figure 2 shows the display screen 10, the refresh buffer memory 20, the boundary information storage means 30 and the row table storage means 40 and 50. Figure 2 shows further a counter means 60 and an address generation means 70. The address generation means 70 is constituted by a register means 72 and a counter means 74.

Now, the operation of the image display system is described. It is assumed here that the portion b of the image B and the portion c of the image C in the refresh buffer memory 20 are displayed in the adjacent display areas II and III from a display row n on the display screen 10.

In fly-back or retrace line after completion of the display row n-1, boundary data defining the boundary between the adjacent display areas II and III, for example 50, is set from the boundary information storage means 30 to the counter means 60. At the same time, the start addresses for the portion b of the image B and the portion c of the image C for the display row n are read from the row table storage means 40 and 50, respectively, the start address for the former and that for the latter being loaded in the counter means 74 and the register means 72, respectively.

When display of the display row n is started, the counter means 60 operates decrementaly. When the count reaches 0 from 50, it outputs a timing signal for switching display for the display area II to that for the display area III. On the other hand, the counter means 74 operates to increment the value of start address loaded therein, and generates sequentially addresses following the start address in the portion b of the image B to be displayed on the row n. When the counter means 60 outputs said timing signal, the start address loaded in the register means 72 is transferred to the counter means 74, which generates sequentially addresses following the start address in the portion c of the image C to be displayed on the row n.

Thus, the display in the adjacent display areas II and III is performed on the display row n. Display is similarly performed for succeeding display rows to display the portion b of the image B in the display area II and the portion c of the image C in the display area III, respectively.

## Claims

1. A method for displaying images in each of plural adjacent areas on a display screen having a plurality of display rows, comprising storing image information in an image information storage means,
   **characterized by** the following steps:
   for each display row, storing in a row information storage means, a start address stored in said image information storage means;
   for each display row, storing in a boundary information storage means, boundary data defining a boundary;
   loading said boundary data in a boundary indication means;
   loading said start address in an adress generation means and generating from said start address an address in said image information storage means for the image information to be displayed; and
   switching the generation of said address under control of said boundary indication means.

2. The method of claim 1, wherein said corresponding boundary data is fetched for each display row after displaying the just preceding display row.

3. A system for displaying images in each of plural adjacent areas on a display screen having a plurality of display rows, comprising
   an image information storage means (20) in which image information is stored, characterized in that there are provided:
   a row information storage means (40;50) in which a start address in said image information storage means (20) is stored for each display row;
   a boundary information storage means (30) in which boundary data defining a boundary is stored for each display row;
   a boundary indication means (60) in which said boundary data is loaded; and
   an address generation means (70) in which said start address is loaded and which generates an address in said image information storage means (20) for the image information to be displayed and which switches generation of said address under control of said boundary indication means (60).

4. The system of claim 3, wherein said boundary information storage means (30) and said row information storage means (40;50) are a row table storage means.

5. The system of claim 3 or 4, wherein said address generation means (70) consists of a counter (74) and a register (72).

6. The system of claim 3, 4 or 5, wherein said boundary indication means (60) is a counter.

## Patentansprüche

1. Verfahren zum Anzeigen von Bildern in jedem mehrerer benachbarter Bereiche auf einem Bildschirm mit einer Mehrzahl von Bildschirmreihen, welches das Speichern von Bildinformationen in einem Speichermittel für Bildinformationen umfaßt,
   gekennzeichnet durch die folgenden Schritte:
   Speichern einer Startadresse, die in dem Speichermittel für Bildinformationen gespeichert ist, in einem Speichermittel für Reiheninformationen für jede Bildschirmreihe,
   Speichern von Randdaten, die einen Rand definieren, in einem Speichermittel für Randinformationen für jede Bildschirmreihe,
   Laden der Randdaten in ein Randanzeigemittel,
   Laden der Startadresse in ein Adreßgeneratormittel und Erzeugen einer Adresse aus der Startadresse in dem Speichermittel für Bildinformationen für die Bildinformationen, die angezeigt werden sollen und
Umschalten der Erzeugung der Adresse unter Steuerung durch das Randanzeigemittel.

2. Verfahren nach Anspruch 1, bei welchem die entsprechenden Randinformationen für jede Bildschirmreihe nach dem Anzeigen der eben vorangegangenen Bildschirmreihe geholt werden.

3. System zum Anzeigen von Bildern in jedem mehrerer benachbarter Bereiche auf einem Bildschirm mit einer Mehrzahl von Bildschirmreihen, das folgendes aufweist:
ein Speichermittel (20) für Bildinformationen in dem Bildinformationen gespeichert sind, das dadurch gekennzeichnet ist, daß folgendes vorgesehen ist:
ein Speichermittel (40; 50) für Reiheninformationen, in dem eine Startadresse in dem Speichermittel (20) für Bildinformationen für jede Bildschirmreihe gespeichert ist,
ein Speichermittel (30) für Randinformationen, in dem Randdaten, die einen Rand definieren, für jede Bildschirmreihe gespeichert sind,
ein Randanzeigemittel (60), in welches die Randdaten geladen werden und
ein Adreßgeneratormittel (70), in welches die Startadresse geladen wird und welches eine Adresse in dem Speichermittel (20) für Bildinformationen für die Bildinformationen erzeugt, die angezeigt werden sollen, und welches eine Erzeugung der Adresse unter Steuerung durch das Randanzeigemittel (60) umschaltet.

4. System nach Anspruch 3, bei welchem das Speichermittel (30) für Randinformationen und das Speichermittel (40; 50) für Reiheninformationen Speichermittel für Reihentabellen sind.

5. System nach Anspruch 3 oder 4, bei welchem das Adreßgeneratormittel (70) aus einem Zähler (74) und einem Register (72) besteht.

6. System nach Anspruch 3, 4 oder 5, bei welchem das Randanzeigemittel (60) ein Zähler ist.

**Revendications**

1. Méthode pour l'affichage d'images dans chacune de plusieurs zones adjacentes sur un écran d'affichage comportant une pluralité de lignes d'affichage , comprenant le stockage d'informations d'image dans une mémoire d'informations d'image,
caractérisée par les étapes suivantes :

pour chaque ligne d'affichage, stockage, dans une mémoire d'informations de ligne, d'une adresse de départ stockée dans ladite mémoire d'informations d'image ;
pour chaque ligne d'affichage, stockage, dans une mémoire d'informations de limite, de données de limite définissant une limite ;
chargement desdites données de limite dans des moyens d'indication de limite ;
chargement de ladite adresse de départ dans des moyens de génération d'adresse, et génération, à partir de ladite adresse de départ, d'une adresse dans ladite mémoire d'informations d'image pour les informations d'image à afficher ; et
commutation de la génération de ladite adresse, sous la commande desdits moyens d'indication de limite.

2. Méthode suivant la revendication 1, dans laquelle lesdites données de limite correspondantes sont extraites, pour chaque ligne d'affichage, après affichage de la ligne d'affichage immédiatement précédente.

3. Système d'affichage d'images dans chacune de plusieurs zones adjacentes sur un écran d'affichage comportant une pluralité de lignes d'affichage, comprenant :
une mémoire d'informations d'image (20) dans laquelle des informations d'image sont stockées, caractérisé en ce qu'il comprend :
une mémoire d'informations de ligne (40;50) dans laquelle une adresse de départ dans ladite mémoire d'informations d'image (20) est stockée pour chaque ligne d'affichage ;
une mémoire d'informations de limite (30) dans laquelle des données de limite définissant une limite sont stockées pour chaque ligne d'affichage ;
des moyens d'indication de limite (60) dans lesquels lesdites données de limite sont chargées ; et
des moyens de génération d'adresse (70) dans lesquels ladite adresse de départ est chargée et qui engendrent une adresse dans ladite mémoire d'informations d'image (20) pour les informations d'image à afficher, et qui commutent la génération de ladite adresse sous la commande desdits moyens d'indication de limite (60).

4. Système suivant la revendication 3, dans lequel ladite mémoire d'informations de limite (30) et ladite mémoire d'informations de ligne (40;50) sont une mémoire de table de ligne.

5. Système suivant la revendication 3 ou 4, dans lequel lesdits moyens de génération d'adresse (70) sont constitués d'un compteur (74) et d'un registre (72).

6. Système suivant la revendication 3,4 ou 5, dans lequel lesdits moyens d'indication de limite (60) sont un compteur.

Table 30:

| | |
|---|---|
| 1 | 50 |
| 2 | 50 |
| ⋮ | ⋮ |
| 14 | 50 |
| 15 | 50 |
| 16 | 30 |
| 17 | 30 |
| ⋮ | ⋮ |
| 24 | 30 |
| 25 | 30 |

30

Table 40:

0000
0080
⋮
1040
1120
4000
4080
⋮
4640
4720

a
c

40

Table 50:

2050
2130
⋮
3090
3170
7230
7310
⋮
7870
7950

b
d

50

20

80

50

80

25

1

0000
0080
1120
1200

A

I  II

2000

b

15
16

3120
3200

B

III  IV

4000
4720
4800

c

C

25

30

6000

10

D

7200
7920

d

FIG. 1

EP 0 200 036 B1

FIG. 2

FIG. 3